# EUROPEAN PATENT SPECIFICATION

(11) **EP 4 307 015 B1**
(45) Date of publication and mention of the grant of the patent: **11.11.2026**
(21) Application number: 23185121.3
(22) Date of filing: 12.07.2023
(51) Int. Cl.: G01T 1/17

(54) **PHOTON COUNTING DETECTOR (PCD) APPARATUS AND OVERLAPPING MICRO-PIXEL SUMMING METHOD**
VORRICHTUNG FÜR PHOTONENZÄHLENDEN DETEKTOR (PCD) UND SUMMIERVERFAHREN FÜR ÜBERLAPPENDE MIKROPIXEL
APPAREIL DE DÉTECTEUR DE COMPTAGE DE PHOTONS (PCD) ET PROCÉDÉ DE SOMMATION DE MICROPIXELS SE CHEVAUCHANT

(30) Priority: 12.07.2022 US 202217862624; 29.06.2023 JP 2023106737
(43) Date of publication of application: 17.01.2024
(73) Proprietor: Canon Medical Systems Corporation, Tochigi 324-0036 (JP)
(72) Inventor: ZHAN, Xiaohui, Otawara-shi, 324-0036 (JP); HEIN, Ilmar, Otawara-shi, 324-0036 (JP); ZHANG, Ruoqiao, Otawara-shi, 324-0036 (JP)
(74) Representative: Marks & Clerk LLP

(56) References cited:
- EP-A1- 3 420 722
- US-A1- 2014 138 553
- US-A1- 2019 114 746
- US-A1- 2021 186 439

## Description

### FIELD

Embodiments described herein relate generally to a photon counting detector apparatus and an overlapping micro-pixel summing method.

### BACKGROUND

Computed tomography (CT) systems and methods are typically used for medical imaging and diagnosis. CT systems generally create projection images through a subject's body at a series of projection angles. A radiation source, such as an X-ray tube, irradiates the body of a subject and projection images are generated at different angles. Images of the subject's body can be reconstructed from the projection images.

Conventionally, energy-integrating detectors (EIDs) and/or photon-counting detectors (PCDs) have been used to measure CT projection data. PCDs offer many advantages including their capacity for performing spectral CT, wherein the PCDs resolve the counts of incident X-rays into spectral components referred to as energy bins, such that collectively the energy bins span the energy spectrum of the X-ray beam. Unlike non-spectral CT, spectral CT generates information due to different materials exhibiting different X-ray attenuation as a function of the X-ray energy. These differences enable a decomposition of the spectrally resolved projection data into different material components, for example, the two material components of the material decomposition can be bone and water.

Even though PCDs have fast response times, at high X-ray flux rates indicative of clinical X-ray imaging, multiple X-ray detection events on a single detector may occur within the detector's time response resulting in a phenomenon called pileup. Left uncorrected, pileup effect distorts the PCD energy response and can degrade reconstructed images from PCDs. When these effects are corrected, spectral CT has many advantages over conventional CT. Many clinical applications can benefit from spectral CT technology, including improved material differentiation since spectral CT extracts complete tissue characterization information from an imaged object.

One challenge for more effectively using semiconductor-based PCDs for spectral CT is performing the material decomposition of the projection data in a robust and efficient manner. For example, correction of pileup in the detection process can be imperfect, and these imperfections degrade the material components resulting from the material decomposition.

In a photon counting CT system, the semiconductor-based detector using direct conversion is designed to resolve the energy of the individual incoming photons and generate measurement of multiple energy bin counts for each integration period. However, due to the detection physics in such semiconductor materials (e.g. CdTe/CZT), the detector energy response is largely degraded/distorted by charge sharing, k-escape, and scattering effects in the energy deposition and charge induction process, as well as electronic noise in the associated front-end electronics. Due to finite signal induction time, at high count-rate conditions, pulse pile-up also distorts the energy response, as discussed above.

Due to sensor material non-uniformity and complexity of the integrated detection system, it is impossible to do accurate modeling of such detector response for a PCD just based on physics theories or Monte Carlo simulations with a certain modeling of the signal induction process, which modeling determines the accuracy of the forward model of each measurement. Also, due to uncertainties in the incident X-ray tube spectrum modeling, the modelling introduces additional errors in the forward model, and all these factors eventually degrade the material decomposition accuracy from the PCD measurements, therefore the generated spectral images.

A typical PCD detector utilizes a much smaller pixel size than a conventional scintillator based energy-integrating detector (EID). The size of the PCD pixel is usually chosen by balancing the charge-sharing effect, which is more prominent with the smaller size, and the pulse pileup effect, which is more severe with the larger pixel size (higher count rate). The smaller pixel design naturally enables various summing schemes which will result in images with different spatial resolutions. Intuitively, a larger summing size results in poorer spatial resolution but lower noise; and a smaller summing size with better spatial resolution but higher noise.

In practice, the effective detection area per detector pitch is further affected by the shadow of anti-scatter-grids. Therefore, the measurement count rate can still significantly vary across the pixels under uniform incident flux, which increases the complexity of detector response modeling as well as the difficulty in the calibration design. The existence of bad pixels in the detector can further degrade image quality. How to mitigate these problems and still generate optimal image quality is a practical problem in PCD system development.

US 2021/186439 relates to a method for generating an X-ray image dataset via an X-ray detector having a converter element and a multiplicity of pixel elements. In an embodiment, the method includes first counting of at least one quantity of count signals dependent upon the incident X-ray radiation in each pixel element of the multiplicity of pixel elements; second counting of at least one quantity of coincidence count signals in each pixel element of the subset of pixel elements with at least one further pixel element of the multiplicity of pixel elements; and generating an X-ray image dataset based upon the at least one quantity of count signals counted in each pixel element of the multiplicity of pixel elements and upon the at least one quantity of coincidence count signals counted in each pixel element of the subset of pixel elements.

US 2019/114746 relates to a processing apparatus that enables margin correction of X-ray intensity data and that includes a calculation unit configured to calculate an expansion rate of X-ray intensity data detected in a unit region on a marginal side on a basis of an intensity distribution resulted from detection of uniform X-ray and a first function generation unit configured to generate an allocation function that allocates the X-ray intensity data detected in the unit region on the marginal side to an outside unit region, on the basis of the expansion rate. Enabling margin correction on the basis of the intensity distribution resulting from detection of uniform X-ray makes it possible to correct the distortion of intensity distribution on the marginal side. As a result, it is possible to expand the detection region of X-ray intensity data.

EP 3420722 relates to an apparatus for imaging an object. It is described to receive by at least a portion of first pixels of a first area of an X-ray detector first radiation emitted by at least one X-ray source. The X-ray detector is configured such that X-ray radiation received by a pixel leads to the generation of signal in that pixel. A plurality of first signals representative of corresponding signals on the plurality of first pixels are stored in at least one first plurality of storage nodes associated with the first area. Second radiation emitted by the at least one X-ray source is received by at least a portion of second pixels of a second area of the X-ray detector. A plurality of second signals representative of corresponding signals on the plurality of second pixels are stored in at least one second plurality of storage nodes associated with the second area.

US 2014/138553 relates to an X-ray detector that is provided with a plurality of modules each having a plurality of detection elements each composing a pixel, in which the detection elements convert incoming radiations to electric data depending on amounts of the radiations. The plural modules are mutually adjacently arranged on the same surface with a gap having a known width formed therebetween, such that the modules are arranged along at least one of a first X-axis and a first Y-axis, wherein the radiation detector is given a scan direction which is set along one of the first X- and Y-axes and the first Y-axis is perpendicular to the first X-axis. The plural detection elements of each module are two-dimensionally arranged along a second X-axis and a second Y-axis which are set obliquely to the first X-axis and the first Y-axis respectively and which are perpendicular to each other.

### Summary of Invention

In a first aspect of the invention according to the wording of the claims, a photon counting detector, PCD, apparatus is provided as recited in claim 1.

In an embodiment, the pixels are sometimes termed "micro-pixels".

The processing circuitry may generate image data based on the first virtual bin value and the second virtual bin value.

The first and second groups may be each n by m arrays of pixels. At least one of m and n is an integer greater than 1. The overlap between the first and second groups may be m or n micro-pixels.

The first and second groups may be each n by n arrays of pixels. n is an integer greater than 1. The overlap between the first and second groups may be n micro-pixels.

The processing circuitry may further reconfigure the PCD array such that the first and second groups are each p by q arrays of pixels. At least one of p and q is an integer greater than 1 and p and q may be not equal to either n and m or m an n. n and m may be 2 and 3, respectively, and p and q may be 3 and 3, respectively.

The first pixel area and second pixel area may be each non-rectangular.

The processing circuitry may configure the PCD array are configured to configure the PCD array prior to receiving the signals from each of the pixels of the plurality of pixels.

The processing circuitry may configure the PCD array after receiving the signals from each of the pixels of the plurality of pixels.

In a second aspect of the invention according to the wording of the claims, an overlapping micro-pixel summing method is provided as recited in claim 9.

The method may further include generating image data based on the first virtual bin value and the second virtual bin value.

The first and second groups may be each n by m arrays of pixels. At least one of m and n is an integer greater than 1. The overlap between the first and second groups may be m or n pixels.

The first and second groups may be each n by n arrays of micro-pixels. n is an integer greater than 1. The overlap between the first and second groups may be n micro-pixels.

The method further includes reconfiguring the PCD array such that the first and second groups are each p by q arrays of pixels. At least one of p and q is an integer greater than 1 and p and q may be not equal to either n and m or m an n.

n and m may be 2 and 3, respectively, and p and q may be 3 and 3, respectively.

The first pixel area and second pixel area may be each non-rectangular.

The PCD array may be configured prior to receiving the signals from each of the plurality of pixels.

The PCD array may be configured after receiving the signals from each of the plurality of pixels.

A computer program product is described as an example not forming part of the invention according to the wording of the claims, that includes a computer readable medium including computer instructions stored therein, wherein the computer instructions, when executed by a computer processor, cause the computer processor to perform the method of claim 9.

The computer program product may further include computer instructions for generating image data based on the first virtual bin value and the second virtual bin value.

The first and second groups may be each n by m arrays of pixels. m and n may be each integers greater than 1. The overlap between the first and second groups may be m or n pixels.

The first and second groups may be each n by n arrays of pixels. n may be an integer greater than 1. The overlap between the first and second groups may be n micro-pixels.

The computer program product further includes computer instructions for reconfiguring the PCD array such that the first and second groups are each p by q arrays of pixels. p and q may be each integers greater than 1 and p and q may be not equal to either n and m or m an n.

n and m may be 2 and 3, respectively, and p and q may be 3 and 3, respectively.

The first pixel area and second pixel area may be each non-rectangular.

The PCD array may be configured prior to receiving the signals from each of the plurality of pixels.

The PCD array may be configured after receiving the signals from each of the plurality of pixels.

### BRIEF DESCRIPTION OF THE DRAWINGS

The application will be better understood in light of the description which is given in a non-limiting manner, accompanied by the attached drawings in which:
Fig. 1 is a block diagram of an exemplary configuration of an X-ray CT apparatus imaging a person as a subject according to an exemplary embodiment described below.
Fig. 2 is a block diagram of an exemplary configuration of information processing apparatus connected to an X-ray CT apparatus according to another exemplary embodiment described below.
Fig. 3A is an illustration of standard pixel binning, with size N x N.
Fig. 3B is an illustration of standard pixel binning, with asymmetrical sizing M x N.
Fig. 4 is an illustration of overlapping pixel binning with symmetrical summing size N x N and overlap in the channel (column) direction only.
Figs. 5A-5C depict the differences in channel output for the standard binning, asymmetrical standard binning, and binning with overlap in the channel direction.
Figs. 6A-6D show reconstructions with the native channels and the three binning methods of Figs. 5A-5C.
Fig. 6E shows the corresponding MTF curves.
Fig. 7 shows a general example of overlapping pixel summation for a M x N summing size with row pitch R and column pitch C.
Fig. 8 depicts an overlapping pixel summation for a non-rectangular shape.

### DETAILED DESCRIPTION

One of problems to be solved by embodiments disclosed in the specification and the drawings is to acquire optimal image quality. However, the problems to be solved by the embodiments disclosed in the specification and the drawings are not limited thereto. Problems corresponding to each effect caused by each configuration described in the embodiments described later can also be considered as other problems.

A photon counting detector (PCD) apparatus of the embodiment includes a PCD array including a plurality of micro-pixels positioned in at least one of a channel direction and a row direction, and processing circuitry configured to receive signals from each of the plurality of micro-pixels, configure the PCD array to include (a) a first micro-pixel area including a first group of plural micro-pixels of the plurality of micro-pixels and (b) a second micro-pixel area including a second group of plural micro-pixels of the plurality of micro-pixels, such that a portion of the first and second groups of plural micro-pixels overlap between the first and second groups, bin the signals from the first group of plural micro-pixels into a first virtual bin value, and bin the signals from the second group of plural micro-pixels into a second virtual bin value.

The disclosure relates to configurable pixel summing in a photon counting computed tomography system, and in one embodiment to a photon counting detector (PCD) apparatus including a dynamically configurable a PCD array including a plurality of micro-pixels positioned in at least one of a channel direction and a row direction, wherein first and second groups of micro-pixels overlap in at least one of the channel and row directions.

Reference throughout this specification to "one embodiment" or "an embodiment" means that a particular feature, structure, material, or characteristic described in connection with the embodiment is included in at least one embodiment of the application, but do not denote that they are present in every embodiment.

Thus, the appearances of the phrases "in one embodiment" or "in an embodiment" in various places throughout this specification are not necessarily referring to the same embodiment of the application. Furthermore, the particular features, structures, materials, or characteristics may be combined in any suitable manner in one or more embodiments.

An X-ray CT will be described as an example of a medical image diagnostic modality herein. In that context, an information processing method of information acquired by imaging performed by the X-ray CT will be described.

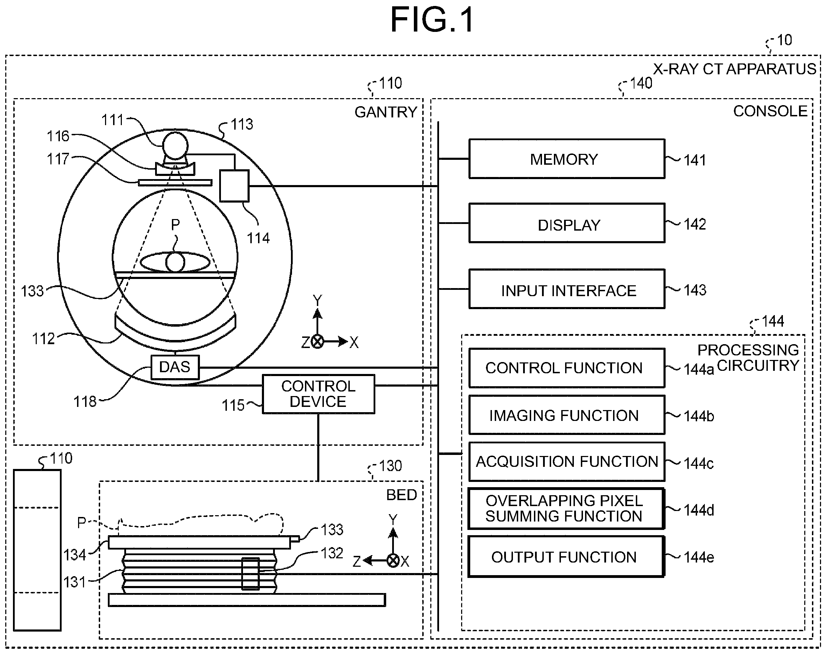

The X-ray CT is implemented, for example, in an X-ray CT apparatus 10 illustrated in FIG. 1. FIG. 1 is a block diagram illustrating an example of a configuration of the X-ray CT apparatus 10 according to a first embodiment. For example, the X-ray CT apparatus 10 has a gantry 110, a bed 130, and a console 140.

In FIG. 1, it is assumed that the longitudinal direction of a rotating shaft of a rotating frame 113 or a tabletop 133 of the bed 130 in a non-tilted state is a Z axis direction. Furthermore, it is assumed that an axial direction orthogonal to the Z axis direction and horizontal to a floor surface is an X axis direction. Furthermore, it is assumed that an axial direction orthogonal to the Z axis direction and perpendicular to the floor surface is a Y axis direction. Note that FIG. 1 illustrates the gantry 110 drawn from a plurality of directions for convenience of description and the X-ray CT apparatus 10 has one gantry 110.

The gantry 110 includes an X-ray tube 111, an X-ray detector 112, the rotating frame 113, an X-ray high voltage device 114, a control device 115, a wedge 116, a collimator 117, and a data acquisition system (DAS) 118.

The X-ray tube 111 is a vacuum tube having a cathode (filament) that generates thermoelectrons and an anode (target) that generates X-rays in response to a collision of thermoelectrons. The X-ray tube 111 emits the thermoelectrons toward the anode from the cathode by the application of a high voltage from the X-ray high voltage device 114, thereby generating the X-rays to be emitted to a subject P.

The X-ray detector 112 detects the X-rays emitted from the X-ray tube 111 and passed through the subject P, and outputs a signal corresponding to the dose of the detected X-rays to the DAS 118. The X-ray detector 112, for example, includes a plurality of detection element arrays in which a plurality of detection elements are arranged in a channel direction (channel direction) along one arc centered on a focal point of the X-ray tube 111. The X-ray detector 112, for example, has a structure in which the detection element arrays with the detection elements arranged in the channel direction are arranged in a row direction (slice direction and row direction).

For example, the X-ray detector 112 is an indirect conversion type detector having a grid, a scintillator array, and a photosensor array. The scintillator array has a plurality of scintillators. Each of the scintillators has a scintillator crystal that outputs light with a photon quantity corresponding to an incident X-ray dose. The grid has an X-ray shielding plate that is disposed on the surface of the scintillator array on an X-ray incident side and absorbs scatted X-rays. The grid may also be referred to as a collimator (a one-dimensional collimator or a two-dimensional collimator). The photosensor array has a function of converting light into an electrical signal corresponding to the amount of light from the scintillator, and has, for example, photosensors such as photodiodes. Note that the X-ray detector 112 may be a direct conversion type detector having a semiconductor element that converts the incident X-rays into electrical signals.

The rotating frame 113 is an annular frame that supports the X-ray tube 111 and the X-ray detector 112 so as to face each other and rotates the X-ray tube 111 and the X-ray detector 112 by the control device 115. For example, the rotating frame 113 is a casting made of aluminum. Note that the rotating frame 113 can further support the X-ray high voltage device 114, the wedge 116, the collimator 117, the DAS 118 and the like, in addition to the X-ray tube 111 and the X-ray detector 112. Moreover, the rotating frame 113 can further support various configurations not illustrated in FIG. 1. Hereinafter, in the gantry 110, the rotating frame 113 and a part, which rotationally moves with the rotating frame 113, are also referred to as a rotating part.

The X-ray high voltage device 114 has electric circuitry such as a transformer and a rectifier, and has a high voltage generation device that generates a high voltage to be applied to the X-ray tube 111 and an X-ray control device that controls an output voltage corresponding to the X-rays generated by the X-ray tube 111. The high voltage generation device may be a transformer type device or an inverter type device. Note that the X-ray high voltage device 114 may be provided on the rotating frame 113, or may also be provided on a fixed frame (not illustrated).

The control device 115 has processing circuitry having a central processing unit (CPU) and the like, and a driving mechanism such as a motor and an actuator. The control device 115 receives input signals from an input interface 143 and controls the operations of the gantry 110 and the bed 130. For example, the control device 115 controls the rotation of the rotating frame 113, the tilt of the gantry 110, the operation of the bed 130, and the like. As an example, as control for tilting the gantry 110, the control device 115 rotates the rotating frame 113 around an axis parallel to the X axis direction based on information on an input inclination angle (tilt angle). Note that the control device 115 may be provided in the gantry 110 or may also be provided in the console 140.

The wedge 116 is an X-ray filter for adjusting the dose of the X-rays emitted from the X-ray tube 111. Specifically, the wedge 116 is an X-ray filter that attenuates the X-rays emitted from the X-ray tube 111 such that the X-rays emitted from the X-ray tube 111 to the subject P have a predetermined distribution. For example, the wedge 116 is a wedge filter or a bow-tie filter and is manufactured by processing aluminum and the like to have a predetermined target angle and a predetermined thickness.

The collimator 117 is a lead plate and the like for narrowing down the emission range of the X-rays having transmitted through the wedge 116 and forms a slit by a combination of a plurality of lead plates and the like. Note that the collimator 117 may also be referred to as an X-ray diaphragm. Furthermore, although FIG. 1 illustrates a case where the wedge 116 is disposed between the X-ray tube 111 and the collimator 117, the collimator 117 may be disposed between the X-ray tube 111 and the wedge 116. In such a case, the wedge 116 attenuates the X-rays, which are emitted from the X-ray tube 111 and whose emission range is limited by the collimator 117, by allowing the X-rays to pass therethrough.

The DAS 118 acquires X-ray signals detected by each detector element included in the X-ray detector 112. For example, the DAS 118 has an amplifier that performs an amplification process on electrical signals output from each detector element and an A/D converter that converts the electrical signals to digital signals, and generates detection data. The DAS 118 is implemented by, for example, a processor.

The data generated by the DAS 118 is transmitted from a transmitter having a light emitting diode (LED) provided on the rotating frame 113 to a receiver having a photodiode provided on a non-rotating part (for example, a fixed frame and the like and not illustrated in FIG. 1) of the gantry 110 by optical communication, and is transmitted to the console 140. The non-rotating part is, for example, a fixed frame and the like that rotatably supports the rotating frame 113. Note that the data transmission method from the rotating frame 113 to the non-rotating part of the gantry 110 is not limited to the optical communication, and may adopt any non-contact type data transmission method or a contact type data transmission method.

The bed 130 is a device that places and moves the subject P to be scanned and includes a pedestal 131, a couch driving device 132, the tabletop 133, and a support frame 134. The pedestal 131 is a casing that supports the support frame 134 so as to be movable in a vertical direction. The couch driving device 132 is a driving mechanism that moves the tabletop 133, on which the subject P is placed, in a long axis direction of the tabletop 133 and includes a motor, an actuator and the like. The tabletop 133 provided on the upper surface of the support frame 134 is a plate on which the subject P is placed. Note that the couch driving device 132 may also move the support frame 134 in the long axis direction of the tabletop 133 in addition to the tabletop 133.

The console 140 has a memory 141, a display 142, the input interface 143, and processing circuitry 144. Although the console 140 is described as a separate body from the gantry 110, the gantry 110 may include the console 140 or a part of each component of the console 140.

The memory 141 is implemented by, for example, a semiconductor memory element such as a random access memory (RAM) and a flash memory, a hard disk, an optical disk, and the like. For example, the memory 141 stores a computer program for circuitry included in the X-ray CT apparatus 10 to perform its functions. Furthermore, the memory 141 stores various information obtained by imaging the subject P. Note that the memory 141 may be implemented by a server group (cloud) connected to the X-ray CT apparatus 10 via a network.

The display 142 displays various information. For example, the display 142 displays an image based on the imaging described herein. Furthermore, for example, the display 142 displays a graphical user interface (GUI) for receiving various instructions, settings, and the like from a user via the input interface 143. For example, the display 142 is a liquid crystal display or a cathode ray tube (CRT) display. The display 142 may be a desktop type display, or may be composed of a tablet terminal and the like capable of wirelessly communicating with the body of the X-ray CT apparatus 10.

Although the X-ray CT apparatus 10 is described as including the display 142 in FIG. 1, the X-ray CT apparatus 10 may include a projector instead of or in addition to the display 142. Under the control of the processing circuitry 144, the projector can perform projection onto a screen, a wall, a floor, the body surface of the subject P, and the like. As an example, the projector can also perform projection onto any plane, object, space, and the like by projection mapping.

The input interface 143 receives various input operations from a user, converts the received input operations into electrical signals, and outputs the electrical signals to the processing circuitry 144. For example, the input interface 143 is implemented by a mouse, a keyboard, a trackball, a switch, a button, a joystick, a touch pad for performing an input operation by touching an operation surface, a touch screen in which a display screen and a touch pad are integrated, non-contact input circuitry using an optical sensor, voice input circuitry, and the like. Note that the input interface 143 may be composed of a tablet terminal and the like capable of wirelessly communicating with the body of the X-ray CT apparatus 10. Furthermore, the input interface 143 may be circuitry that receives an input operation from a user by motion capture. As an example, the input interface 143 can receive a user's body movement, line of sight, and the like as an input operation by processing a signal acquired via a tracker or an image collected for a user. Furthermore, the input interface 143 is not limited to one including physical operation parts such as a mouse and a keyboard. For example, an example of the input interface 143 includes electric signal processing circuitry which receives an electric signal corresponding to an input operation from an external input device separately provided from the X-ray CT apparatus 10 and outputs the electric signal to the processing circuitry 144.

The processing circuitry 144 controls the overall operation of the X-ray CT apparatus 10 by performing a control function 144a, an imaging function 144b, an acquisition function 144c, an overlapping pixel summing function 144d, and an output function 144e.

For example, the processing circuitry 144 reads a computer program corresponding to the control function 144a from the memory 141 and executes the read computer program, thereby controlling various functions, such as the imaging function 144b, the acquisition function 144c, the overlapping pixel summing function 144d, and the output function 144e, based on various input operations received from a user via the input interface 143.

Furthermore, for example, the processing circuitry 144 reads a computer program corresponding to the imaging function 144b from the memory 141 and executes the read computer program, thereby imaging the subject P. For example, the imaging function 144b controls the X-ray high voltage device 114 to supply the X-ray tube 111 with a high voltage. With this, the X-ray tube 111 generates X-rays to be emitted to the subject P. Furthermore, the imaging function 144b controls the couch driving device 132 to move the subject P into an imaging port of the gantry 110. Furthermore, the imaging function 144b adjusts the position of the wedge 116 and the opening degree and position of the collimator 117, thereby controlling the distribution of the X-rays emitted to the subject P. Furthermore, the imaging function 144b controls the control device 115 to rotate the rotating part. Furthermore, while the imaging is performed by the imaging function 144b, the DAS 118 acquires X-ray signals from the respective detection elements in the X-ray detector 112 and generates detection data.

Furthermore, the imaging function 144b performs pre-processing on the detection data output from the DAS 118. For example, the imaging function 144b performs pre-processing, such as logarithmic transformation processing, offset correction processing, inter-channel sensitivity correction processing, and beam hardening correction, on the detection data output from the DAS 118. Note that the data subjected to the pre-processing is also described as raw data. Furthermore, the detection data before the pre-processing and the raw data subjected to the pre-processing are also collectively described as projection data.

Furthermore, for example, the processing circuitry 144 reads a computer program corresponding to the acquisition function 144c from the memory 141 and executes the read computer program to acquire image data. Furthermore, for example, the processing circuitry 144 reads a computer program corresponding to the overlapping pixel summing function 144d from the memory 141 and executes the read computer program, thereby creating and/or using the energy dependent forward model. Furthermore, for example, the processing circuitry 144 reads a computer program corresponding to the output function 144e from the memory 141 and executes the read computer program, thereby outputting an image based on the overlapping pixel summation.

In the X-ray CT apparatus 10 illustrated in FIG. 1, the respective processing functions are stored in the memory 141 in the form of the computer programs executable by a computer. The processing circuitry 144 is a processor that performs a function corresponding to each computer program by reading and executing the computer program from the memory 141. In other words, the processing circuitry 144 having read the computer program has a function corresponding to the read computer program.

Note that, in FIG. 1, it has been described that the control function 144a, the imaging function 144b, the acquisition function 144c, the overlapping pixel summing function 144d, and the output function 144e are implemented by the single processing circuitry 144, but the processing circuitry 144 may be configured by combining a plurality of independent processors, and each processor may be configured to perform each function by executing each computer program. Furthermore, each processing function of the processing circuitry 144 may be performed by being appropriately distributed or integrated into a single circuit or a plurality of processing circuits.

Furthermore, the processing circuitry 144 may also perform the functions by using a processor of an external device connected via the network. For example, the processing circuitry 144 reads and executes the computer program corresponding to each function from the memory 141 and uses, as computation resources, a server group (cloud) connected to the X-ray CT apparatus 10 via the network, thereby performing each function illustrated in FIG. 1.

Furthermore, although FIG. 1 illustrates only the single memory 141, the X-ray CT apparatus 10 may include a plurality of physically separated memories. For example, the X-ray CT apparatus 10 may separately include, as the memory 141, a memory that stores a computer program required when circuitry included in the X-ray CT apparatus 10 performs its function, a memory that stores various information obtained by imaging the subject P.

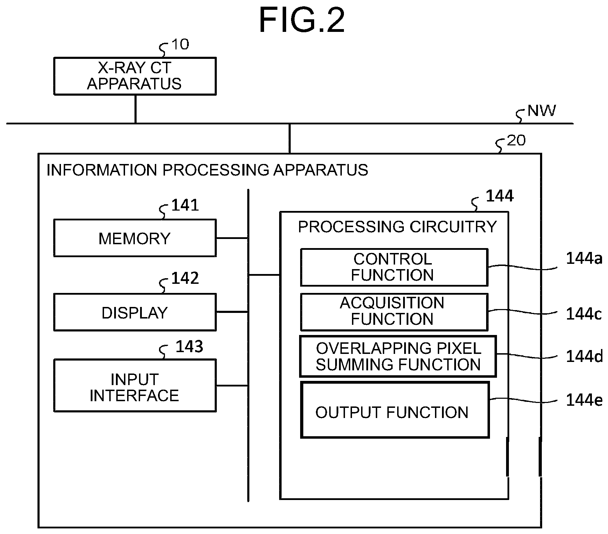

Hereinafter, this point will be described with reference to FIG. 2. FIG. 2 is a block diagram illustrating an example of a configuration of an information processing system 1 according to a second embodiment. For example, the information processing system 1 includes an X-ray CT apparatus 10 and an information processing apparatus 20 as illustrated in FIG. 2. The X-ray CT apparatus 10 and the information processing apparatus 20 are connected to each other via a network NW.

Note that the location where the X-ray CT apparatus 10 and the information processing apparatus 20 are installed is arbitrary as long as they can be connected via the network NW. For example, the X-ray CT apparatus 10 and the information processing apparatus 20 may be installed within facilities different from each other. That is, the network NW may be a local network closed within the facility or a network via the Internet. Furthermore, communication between the X-ray CT apparatus 10 and the information processing apparatus 20 may be performed via another apparatus such as an image storage apparatus, or may be directly performed without using another apparatus. An example of such an image storage apparatus includes a picture archiving and communication system (PACS) server, for example.

The X-ray CT apparatus 10 illustrated in FIG. 2 has the same configuration as that of the X-ray CT apparatus 10 illustrated in FIG. 1. However, the processing circuitry 144 of the X-ray CT apparatus 10 illustrated in FIG. 2 may or may not have such functions as the acquisition function 144c and the output function 144e. Furthermore, although FIG. 2 illustrates the X-ray CT apparatus 10 as an example of a medical image diagnostic apparatus, the information processing system 1 may include a medical image diagnostic apparatus different from the X-ray CT apparatus 10. Furthermore, the information processing system 1 may include a plurality of medical image diagnostic apparatuses.

The information processing apparatus 20 performs various processes based on data acquired by the X-ray CT apparatus 10. For example, as illustrated in FIG. 2, the information processing apparatus 20 includes a memory 141, a display 142, an input interface 143, and processing circuitry 144. The display 142 can be configured similarly to the aforementioned display 142 in the apparatus 10. The information processing apparatus 20 may include a projector instead of or in addition to the display 142.

The input interface 143 can be configured similarly to the aforementioned input interface 143 of the X-ray CT apparatus 10. For example, the input interface 143 receives various input operations from a user, converts the received input operations into electrical signals, and outputs the electrical signals to the processing circuitry 144.

The processing circuitry 144 controls the overall operation of the information processing apparatus 20 by performing a control function 144a, an acquisition function 144c, and an output function 144e. For example, the control function 144a controls various functions such as the acquisition function 144c and the output function 144e based on the various input operations received from the user via the input interface 143. The acquisition function 144c is a function corresponding to the acquisition function 144c of the X-ray CT apparatus 10. The output function 144e is a function corresponding to the output function 144e of the X-ray CT apparatus 10.

In the information processing apparatus 20 illustrated in FIG. 2, respective processing functions are stored in the memory 141 in the form of computer programs that can be executed by a computer. The processing circuitry 144 is a processor that reads and executes the computer programs from the memory 141, thereby performing functions corresponding to the computer programs. In other words, the processing circuitry 144 having read the computer programs has the functions corresponding to the read computer programs. Furthermore, each processing function of the processing circuitry 144 may be performed by being appropriately distributed or integrated into a single processing circuit or a plurality of processing circuits. Furthermore, the processing circuitry 144 may also perform the functions by using a processor of an external device connected via the network NW. For example, the processing circuitry 144 reads and executes the computer programs corresponding to the functions from the memory 141 and uses, as computation resources, a server group (cloud) connected to the information processing apparatus 20 via the network NW, thereby performing the functions illustrated in FIG. 2.

Furthermore, in FIG. 1, it has been described that the single memory 141 stores the computer programs corresponding to the respective processing functions of the processing circuitry 144. Furthermore, in FIG. 2, it has been described that the single memory 144 stores the computer programs corresponding to the respective processing functions of the processing circuitry 144. However, the embodiment is not limited thereto. For example, a plurality of memories 141 may be arranged in a distributed manner, and the processing circuitry 144 may be configured to read corresponding computer programs from the individual memories 141. Furthermore, instead of storing the computer programs in the memory 141, the computer programs may be directly incorporated in the circuit of the processor. In such a case, the processor reads and executes the computer programs incorporated in the circuit to perform functions thereof.

Each component of each apparatus according to the aforementioned embodiment is functionally conceptual and does not necessarily need to be physically configured as illustrated in the drawings. That is, the specific form of distribution and integration of each apparatus is not limited to that illustrated in the drawing and all or some thereof can be functionally or physically distributed and integrated in arbitrary units according to various loads, usage conditions, and the like. Moreover, all or some of the processing functions performed by each apparatus may be performed by the CPU and the computer programs that are analyzed and executed by the CPU, or may be performed as a wired logic-based hardware.

Furthermore, the information processing method described in the aforementioned embodiment can be implemented by executing an information processing program prepared in advance on a computer such as a personal computer and a workstation. The information processing program can be distributed via a network such as the Internet. Furthermore, the information processing program can be executed by being recorded on a non-transitory computer readable recording medium such as a hard disk, a flexible disk (FD), a CD-ROM, a magneto-optical (MO) disc, and a DVD, and being read from the recording medium by the computer.

One challenge for more effectively using semiconductor-based PCDs for spectral CT is performing the material decomposition of the projection data in a robust and efficient manner. For example, correction of pileup in the detection process can be imperfect, and these imperfections degrade the material components resulting from the material decomposition.

In a photon counting CT system, the semiconductor-based detector using direct conversion is designed to resolve the energy of the individual incoming photons and generate measurement of multiple energy bin counts for each integration period. However, due to the detection physics in such semiconductor materials (e.g. CdTe/CZT), the detector energy response is largely degraded/distorted by charge sharing, k-escape, and scattering effects in the energy deposition and charge induction process, as well as electronic noise in the associated front-end electronics. Due to finite signal induction time, at high count-rate conditions, pulse pile-up also distorts the energy response, as discussed above.

Due to sensor material non-uniformity and complexity of the integrated detection system, it is impossible to do accurate modeling of such detector response for a PCD just based on physics theories or Monte Carlo simulations with a certain modeling of the signal induction process, which modeling determines the accuracy of the forward model of each measurement. Also, due to uncertainties in the incident X-ray tube spectrum modeling, the modelling introduces additional errors in the forward model, and all these factors eventually degrade the material decomposition accuracy from the PCD measurements, therefore the generated spectral images.

A typical PCD detector utilizes a much smaller pixel size than a conventional scintillator based energy-integrating detector (EID). The size of the PCD pixel is usually chosen by balancing the charge-sharing effect, which is more prominent with the smaller size, and the pulse pileup effect, which is more severe with the larger pixel size (higher count rate). The smaller pixel design naturally enables various summing schemes which will result in images with different spatial resolutions. Intuitively, a larger summing size results in poorer spatial resolution but lower noise; and a smaller summing size with better spatial resolution but higher noise.

In practice, the effective detection area per detector pitch is further affected by the shadow of anti-scatter-grids. Therefore, the measurement count rate can still significantly vary across the pixels under uniform incident flux, which increases the complexity of detector response modeling as well as the difficulty in the calibration design. The existence of bad pixels in the detector can further degrade image quality. How to mitigate these problems and still generate optimal image quality is a practical problem in PCD system development.

As will be explained below, the the X-ray CT apparatus 10 and the information processing apparatus 20 are configured so that they can generate image data of optimum quality by achieving both improved spatial resolution and reduced noise.

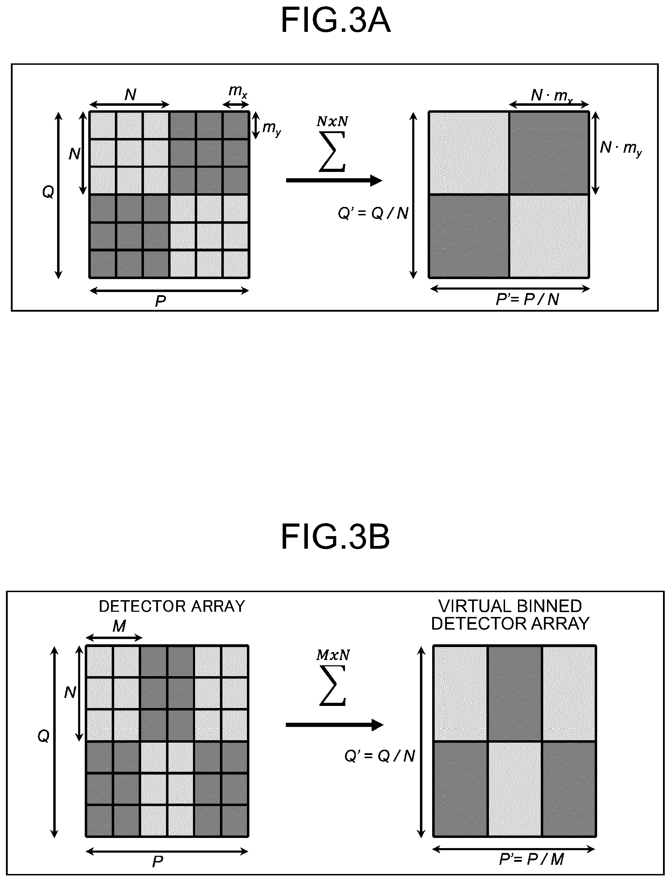

Known detector pixel binning reduces noise and improves signal-to-noise ratio in certain imaging systems under certain conditions. A standard pixel binning method consists of combining *N* x *N* groups of subpixels, each with subpixel dimension *mₓ* x *m_{y},* to create larger virtual pixels, as shown in Fig. 3A. Fig. 3A depicts non-overlapping pixel binning where *N*=3. The detector array of Fig. 3A is of size P x *Q*, and its binning size is *N* x *N*. *N* x *N* subpixel groups are combined to produce a virtual binned detector array of size *P'* x *Q'.* In CCD digital cameras, for example, typically 2x2 or 3x3 groups of subpixels are combined to create a larger less noisy pixel. Standard pixel binning has been described for integrated detector x-ray systems. Known PCCT systems have implemented standard pixel binning up to 4x4.

The subpixel grouping does not have to be square, and rectangular or asymmetrical *N* x *M* subpixel groups can be implemented as well. Fig. 3B depicts asymmetrical pixel binning where *M* x *N* = 2 x 3. Here the pitch and number of subpixels in the column (also called channel) direction is two, and the number of subpixels in the row (also called segment) direction is three.

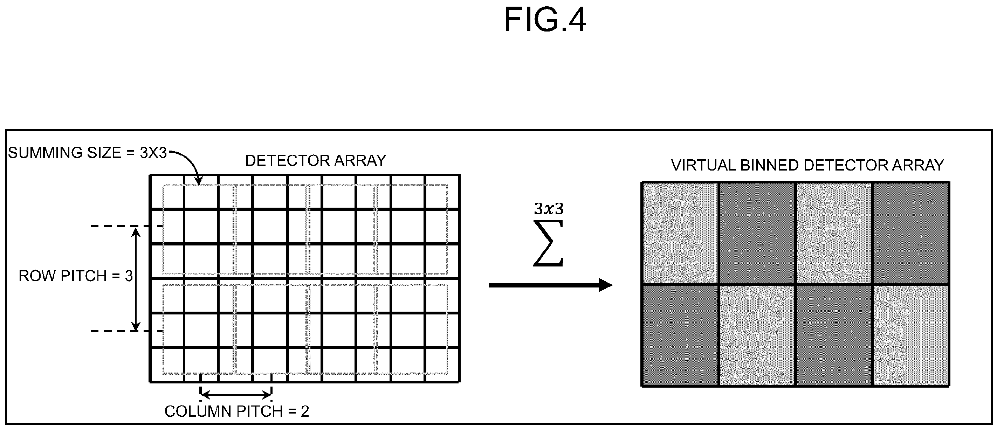

According embodiments described herein, pixel binning can be performed by using an overlapping summing scheme to be applied on PCD CT systems with small pixels. When combining the subpixels to a large size at a pitch that is less than the summing size, spatial resolution is improved compared to the summing size without overlap by trading off the noise performance. The additional benefits are a more robust projection measurement and less image quality problems associated with photon starvation. FIG. 4 shows an example of an overlapping pixel binning structure. It utilizes a 3x3 subpixel summation, as in FIG. 3A, but with a column pitch of two and row pitch of three, like the 2x3 binning in FIG. 3B. In this case, one of the three columns contributes to both the left and right neighbouring summed pixels. In an embodiment, the row pitch is equal to the group subpixel group matrix size, hence the overlap is only in the column (channel) direction. To achieve this configuration, the PCD array is configured to include (a) a first micro-pixel area including a first group of plural micro-pixels of the plurality of micro-pixels (indicated as the first 3x3 group encircled by a solid line) and (b) a second micro-pixel area including a second group of plural micro-pixels of the plurality of micro-pixels (indicated as the first 3x3 group encircled by a dashed line), such that a portion of the first and second groups of plural micro-pixels overlap between the first and second groups as shown by those pixels encircled by both a solid line and a dashed line. FIG. 4 shows 8 micro-pixel areas with 6 overlapping regions encircled by both a solid line and a dashed line.

This configuration of the PCD array can be performed virtually after the raw data has been collected from the array, or the PCD array can be configured with summing circuitry configured to perform the PCD array configuration and summing using virtual bins as discussed below based on the PCD array receiving configuration information describing the layout where the configuration information is sent from a connected processor.

A PCCT system requires calibration and generation of calibration tables for the forward response. According to an embodiment, the calibration, generation of the calibration tables, and the summing scheme for calibration are matched to those used for imaging.

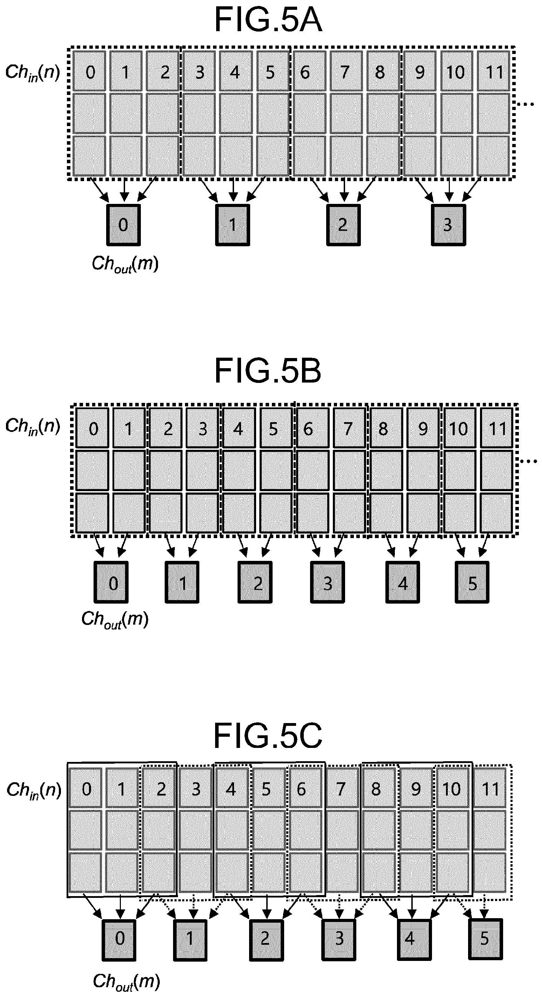

Referring now to FIGs. 5A, 5B, and 5C, FIGs. 5A and 5B illustrate the standard pixel binning (3x3 and 2x3, respectively), while FIG. 5C illustrates an overlapping pixel scheme for a 3x3 pixel-array with overlap, according to one embodiment. Here, *Chᵢₙ(n)* is input unbinned data, and *Chₒᵤₜ(m)* is the resulting output binned data. In each case, the total number of input channels is *NChᵢₙ,* and the total number of binned output channels is *NChₒᵤₜ.* The 3x3 scheme without overlap (FIG. 5A) yields *NChₒᵤₜ* evenly spaced with respect to *NChᵢₙ,* such that ${NCh}_{out} = \frac{{NCh}_{in}}{3}$*.* The 2x3 scheme without overlap (FIG. 5B) also yields *NChₒᵤₜ* evenly spaced with respect to *NChᵢₙ,* such that ${NCh}_{out} = \frac{{NCh}_{in}}{2}$*.* FIG. 5C depicts how the 3x3 overlap scheme (with column pitch = 2) changes the output. In FIG. 5C, ${NCh}_{out} = \frac{{NCh}_{in}}{2}$*,* but for even *NChᵢₙ,* there will be a missing column, and output channels *NChₒᵤₜ* will be offset with respect to *NChᵢₙ.* In the embodiment of FIG. 5C, the pixels are summed with equal weighting, and the spatial resolution versus noise reduction is achieved by the amount of overlap, not weighting. Thus, the embodiment of FIG. 5C provides an advantage that the overlap provides better resolution for similar noise reduction compared to non-overlap binning or filtering. In an alternate embodiment, the summing can be further weighted so that center channels are weighted more to enhance spatial resolution. Additionally, the QQ offset is adjusted to compensate for the missing column.

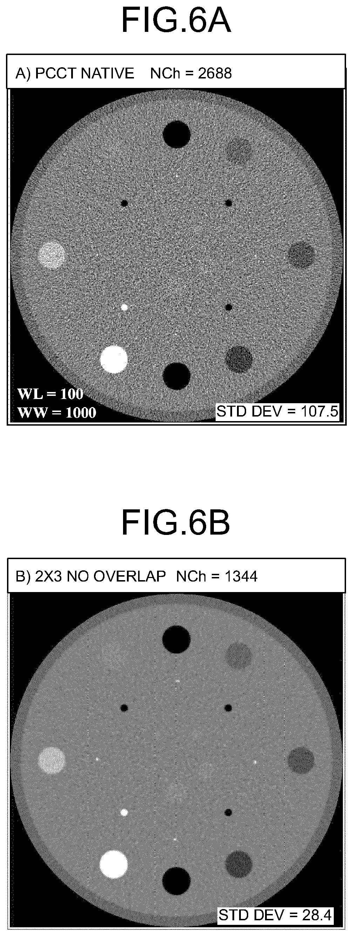

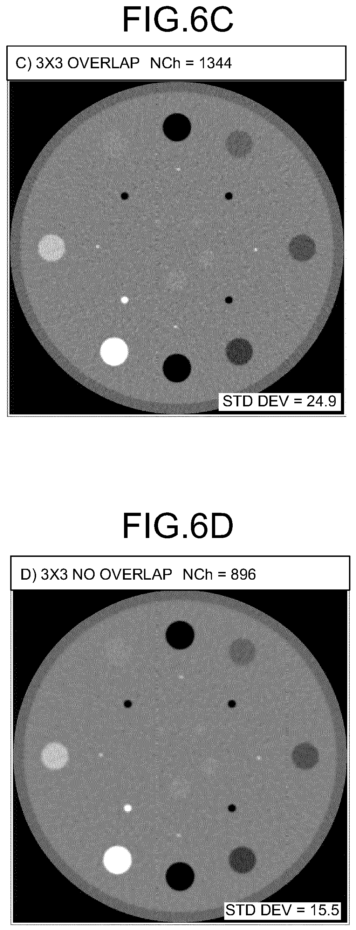

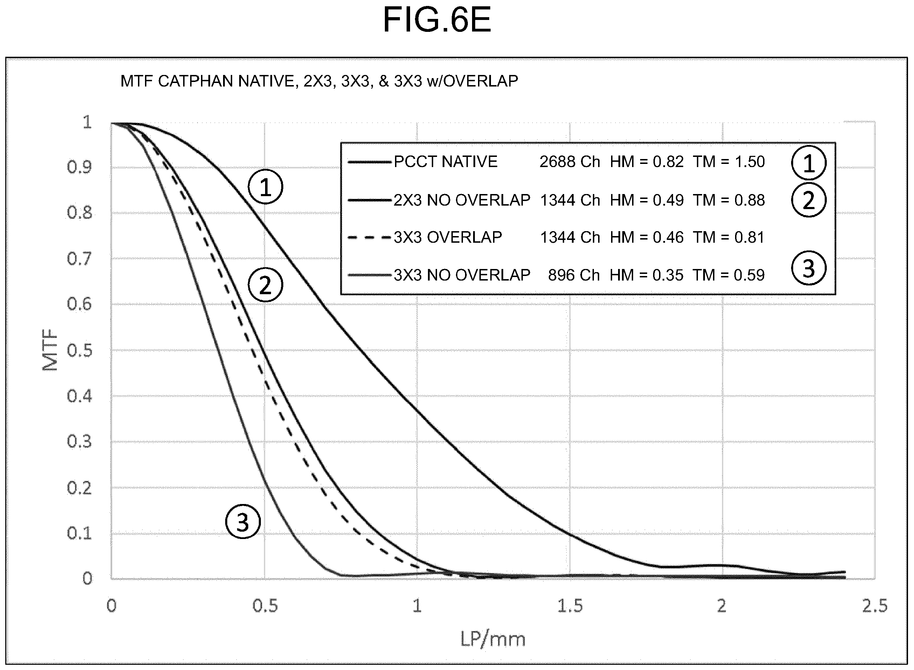

FIGs. 6A-6D depict the reconstruction results of the native and the three binning methods discussed with respect to FIGs. 5A-5C, and FIG. 6E depicts the corresponding Modulation Transfer Function (MTF) curves. Here, the pixels are summed without weighting. The 3x3 with overlap yields similar resolution to the 2x3 without overlap, but the 3x3 with overlap has better noise performance. An advantage of overlapping pixel summing is that when subpixels are combined at a pitch that is less than the summing size extra spatial resolution can be gained with smaller loss in noise performance. Overlapping pixel summing also offer more flexibility in determining the spatial resolution versus noise performance which comes from the ability to vary the amount of overlap.

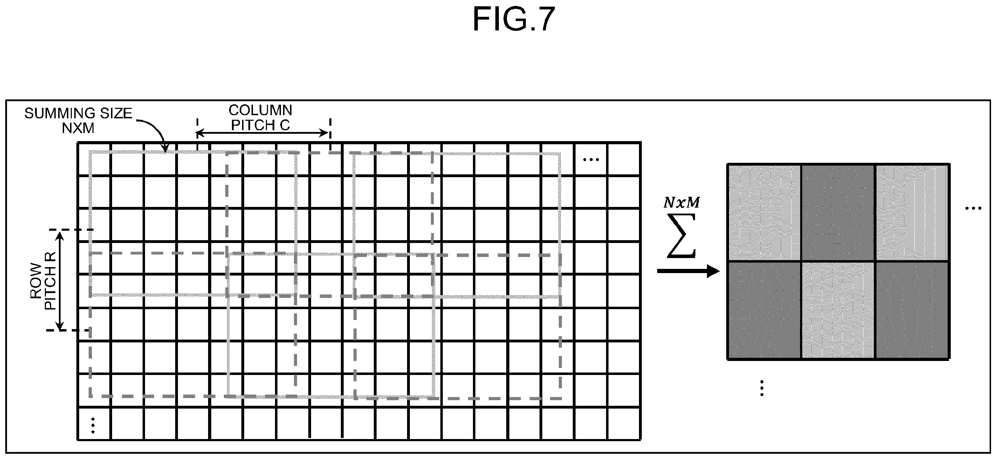

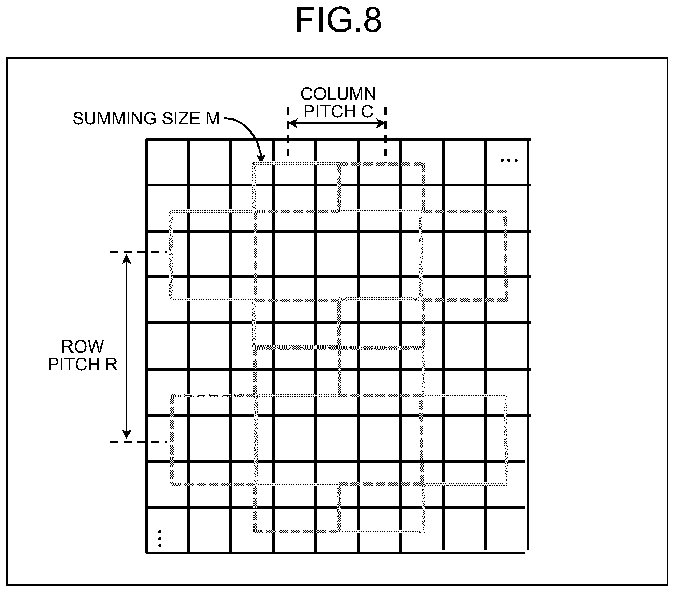

The embodiment described above (3x3 with column pitch = 2) is only one example of possible overlapping pixel summing schemes. Alternate summing scheme embodiments can include any summing size *M* x *N*, any column pitch *C*, any row pitch *R*, any overlap in the column direction, any overlap in the row direction, and any overlap in both the column and row directions. FIG. 7 shows a generic example where the embodiments can be implemented by varying *N*, *M, C*, and *R*. Other embodiments include the previous embodiments, but include non-rectangular summing sizes, such as a cross as depicted in FIG. 8.

In an embodiment, more than one overlapping scheme is implemented. An example of when using more than one overlapping scheme could be useful is when a system has options for imaging at different resolutions and each resolution may require a different overlapping summing scheme. Another example could be when different detectors are used, like differing charge sharing and crosstalk effects, different overlapping summing schemes may need to be used. Additionally, multiple overlapping summing schemes may be required when sensor materials are not uniform or for other detection system complexities that do not allow for accurate modeling of the photon counting detector response and different calibration schemes are used to calibrate the forward model. Another factor that may required multiple overlapping summing schemes is when an anti-scatter grid is implemented with the detector.

The overlapping pixel summing scheme is not limited to PCCT detectors or systems. The scheme can be applied to any type of detector or imaging system including x-ray integrating non-PCCT, optical cameras, acoustic sensors, and nuclear imaging.

The use of overlapping pixel summing schemes compared to standard pixel binning can result in improved spatial resolution with less of a tradeoff in noise performance, improved image quality by reducing degrading effects of sensor material non-uniformity, improved image quality by reducing degrading effects due to photon counting detection physics in semiconductor materials such as charge sharing, k-escape, and scattering, and improved image quality by reducing the degrading effects of shadow of anti-scatter grid.

The term "processor" used in the above description, for example, means a circuit such as a CPU, a graphics processing unit (GPU), an application specific integrated circuit (ASIC), and a programmable logic device (for example, a simple programmable logic device (SPLD), a complex programmable logic device (CPLD), and a field programmable gate array (FPGA)). When the processor is, for example, the CPU, the processor performs functions by reading and executing computer programs stored in a storage circuit. On the other hand, when the processor is, for example, the ASIC, the functions are directly incorporated in the circuit of the processor as a logic circuit instead of storing the computer programs in the storage circuit. Note that each processor of the embodiment is not limited to a case where each processor is configured as a single circuit, and one processor may be configured by combining a plurality of independent circuits to perform functions thereof. Moreover, a plurality of components in each drawing may be integrated into one processor to perform functions thereof.

According to at least one of the embodiments and the modification, the optimal image quality can be acquired.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. A photon counting detector "PCD" apparatus (10, 20) comprising:
a PCD array (112) including a plurality of pixels positioned in at least one of a channel direction and a row direction; and
processing circuitry (144) configured to:
receive signals from each of the plurality of pixels,
configure the PCD array to include (a) a first pixel area including a first group of pixels of the plurality of pixels and (b) a second pixel area including a second group of pixels of the plurality of pixels, such that a portion of the pixels overlap between the first and second groups, wherein a group matrix size of the first pixel area and a group matrix size of the second pixel area are the same,
bin the signals from the first group of pixels into a first virtual bin value; and
bin the signals from the second group of pixels into a second virtual bin value,
**characterized in that** the processing circuitry is further configured to
vary an amount of overlap between the first and second groups according to spatial resolution.

2. The photon counting detector "PCD" apparatus of claim 1, wherein the first and second groups are each n by m arrays of pixels where m and n are each integers greater than 1, and
wherein the overlap between the first and second groups is m or n pixels.

3. The photon counting detector "PCD" apparatus according to claim 1, wherein the first and second groups are each n by n arrays of pixels where n is an integer greater than 1, and
wherein the overlap between the first and second groups is n pixels.

4. The photon counting detector "PCD" apparatus according to claim 2, wherein the processing circuitry (144) is further configured to reconfigure the PCD array such that the first and second groups are each p by q arrays of pixels where p and q are each integers greater than 1 and p and q are not equal to either n and m or m an n.

5. The photon counting detector "PCD" apparatus according to claim 2, wherein n and m are 2 and 3, respectively, and p and q are 3 and 3, respectively.

6. The photon counting detector "PCD" apparatus according to claim 1, wherein the first pixel area and second pixel area are each non-rectangular.

7. The photon counting detector "PCD" apparatus according to any preceding claim, wherein processing circuitry (144) is configured to configure the PCD array prior to receiving the signals from each of the pixels of the plurality of pixels.

8. The photon counting detector "PCD" apparatus according to any of claims 1 to 6, wherein processing circuitry (144) is configured to configure the PCD array after receiving the signals from each of the pixels of the plurality of pixels.

9. An overlapping pixel summing method comprising:
configuring a PCD array (112) including a plurality of pixels positioned in at least one of a channel direction and a row direction to include a first pixel area including a first group of pixels of the plurality of pixels and a second pixel area including a second group of pixels of the plurality of pixels, such that a portion of pixels overlap between the first and second groups, wherein a group matrix size of the first pixel area and a group matrix size of the second pixel area are the same;
receiving signals from each of the plurality of pixels;
binning the signals from the first group of pixels into a first virtual bin value;
binning the signals from the second group of pixels into a second virtual bin value, and
**characterized in that** the method further comprises the step of
varying an amount of overlap between the first and second groups according to spatial resolution.

10. The method according to claim 9, wherein the first and second groups are each n by m arrays of pixels where m and n are each integers greater than 1, and
wherein the overlap between the first and second groups is m or n pixels.

11. The method according to claim 9, wherein the first and second groups are each n by n arrays of pixels where n is an integer greater than 1, and
wherein the overlap between the first and second groups is n pixels.

12. The method according to claim 10, further comprising reconfiguring the PCD array (112) such that the first and second groups are each p by q arrays of pixels where p and q are each integers greater than 1 and p and q are not equal to either n and m or m an n.

13. The method according to claim 10, wherein n and m are 2 and 3, respectively, and p and q are 3 and 3, respectively.

14. The method according to claim 9, wherein the first pixel area and second pixel area are each non-rectangular.

15. The method according to any of claims 9 to 14, wherein the PCD array (112) is configured prior to receiving the signals from each of the plurality of pixels.

16. The method according to any of claims 9 to 14, wherein the PCD array (112) is configured after receiving the signals from each of the plurality of pixels.

## Patentansprüche

1. Photonenzähldetektoreinrichtung "PCD" (10, 20), umfassend:
ein PCD-Array (112), das mehrere Pixel beinhaltet, die in mindestens einer von einer Kanalrichtung und einer Zeilenrichtung positioniert sind; und
Verarbeitungsschaltung (144), die konfiguriert ist:
Signale von jedem der mehreren Pixel zu empfangen,
das PCD-Array so zu konfigurieren, dass es (a) einen ersten Pixelbereich, der eine erste Gruppe von Pixeln aus den mehreren Pixeln beinhaltet, und (b) eine zweiten Pixelbereich beinhaltet, der eine zweiten Gruppe von Pixeln aus den mehreren Pixeln beinhaltet, sodass ein Teil der Pixel zwischen der ersten und der zweiten Gruppe überlappt, wobei eine Gruppenmatrixgröße des ersten Pixelbereichs und eine Gruppenmatrixgröße des zweiten Pixelbereichs gleich sind,
die Signale von der ersten Pixelgruppe zu einem ersten virtuellen Bin-Wert zusammenzufassen; und
die Signale von der zweiten Pixelgruppe zu einem zweiten virtuellen Bin-Wert zusammenzufassen,
**dadurch gekennzeichnet, dass** die Verarbeitungsschaltung ferner konfiguriert ist:
ein Ausmaß an Überlappung zwischen der ersten und der zweiten Gruppe gemäß einer räumlichen Auflösung zu variieren.

2. Photonenzähldetektoreinrichtung "PCD" nach Anspruch 1, wobei die erste und die zweite Gruppe jeweils n mal m Pixelarrays sind, wobei m und n jeweils ganze Zahlen größer als 1 sind, und
wobei die Überlappung zwischen der ersten und zweiten Gruppe m oder n Pixel beträgt.

3. Photonenzähldetektoreinrichtung "PCD" nach Anspruch 1, wobei die erste und die zweite Gruppe jeweils n mal n Pixelarrays sind, wobei n eine ganze Zahl größer als 1 ist, und
wobei die Überlappung zwischen der ersten und der zweiten Gruppe n Pixel beträgt.

4. Photonenzähldetektoreinrichtung "PCD" nach Anspruch 2, wobei die Verarbeitungsschaltung (144) ferner so konfiguriert ist, dass sie das PCD-Array so umkonfiguriert, dass die erste und zweite Gruppe jeweils p mal q Pixel-Arrays sind, wobei p und q jeweils ganze Zahlen größer als 1 sind und p und q nicht gleich n und m oder m und n sind.

5. Photonenzähldetektoreinrichtung "PCD" nach Anspruch 2, wobei n und m 2 bzw. 3 sind und p und q 3 bzw. 3 sind.

6. Photonenzähldetektoreinrichtung "PCD" nach Anspruch 1, wobei der erste Pixelbereich und der zweite Pixelbereich jeweils nicht rechteckig sind.

7. Photonenzähldetektoreinrichtung "PCD" nach einem vorstehenden Anspruch, wobei die Verarbeitungsschaltung (144) so konfiguriert ist, dass sie das PCD-Array konfiguriert, bevor sie die Signale von jedem der Pixel der mehreren Pixeln empfängt.

8. Photonenzähldetektoreinrichtung "PCD" nach einem der Ansprüche 1 bis 6, wobei die Verarbeitungsschaltung (144) so konfiguriert ist, dass sie das PCD-Array nach Empfangen der Signale von jedem der Pixel der mehreren Pixeln konfiguriert.

9. Summierverfahren für überlappende Pixel, umfassend:
Konfigurieren eines PCD-Arrays (112), das mehrere Pixel beinhaltet, die in mindestens einer von einer Kanalrichtung und einer Zeilenrichtung positioniert sind, so dass es einen ersten Pixelbereich, der eine erste Gruppe von Pixeln aus den mehreren Pixeln beinhaltet, und (b) einen zweiten Pixelbereich beinhaltet, der eine zweite Gruppe von Pixeln aus den mehreren Pixeln beinhaltet, sodass ein Teil der Pixel zwischen der ersten und der zweiten Gruppe überlappt, wobei eine Gruppenmatrixgröße des ersten Pixelbereichs und eine Gruppenmatrixgröße des zweiten Pixelbereichs gleich sind;
Empfangen von Signalen von jedem der mehreren Pixel;
Zusammenfassen der Signale von der ersten Pixelgruppe zu einem ersten virtuellen Bin-Wert;
Zusammenfassen der Signale von der zweiten Pixelgruppe zu einem zweiten virtuellen Bin-Wert, und
**dadurch gekennzeichnet, dass** das Verfahren ferner folgenden Schritt umfasst
Variieren eines Ausmaßes an Überlappung zwischen der ersten und der zweiten Gruppe gemäß einer räumlichen Auflösung.

10. Verfahren nach Anspruch 9, wobei die erste und die zweite Gruppe jeweils n mal m Pixelarrays sind, wobei m und n jeweils ganze Zahlen größer als 1 sind, und
wobei die Überlappung zwischen der ersten und zweiten Gruppe m oder n Pixel beträgt.

11. Verfahren nach Anspruch 9, wobei die erste und die zweite Gruppe jeweils n mal n Pixelarrays sind, wobei n eine ganze Zahl größer als 1 ist, und
wobei die Überlappung zwischen der ersten und der zweiten Gruppe n Pixel beträgt.

12. Verfahren nach Anspruch 10, ferner umfassend Umkonfigurieren des PCD-Arrays (112) sodass die erste und zweite Gruppe jeweils p mal q Pixel-Arrays sind, wobei p und q ganze Zahlen größer als 1 sind und p und q nicht gleich n und m oder m und n sind.

13. Verfahren nach Anspruch 10, wobei n und m 2 bzw. 3 sind und p und q 3 bzw. 3 sind.

14. Verfahren nach Anspruch 9, wobei der erste Pixelbereich und der zweite Pixelbereich jeweils nicht rechteckig sind.

15. Verfahren nach einem der Ansprüche 9 bis 14, wobei das PCD-Array (112) vor Empfangen der Signale von jedem der mehreren Pixel konfiguriert wird.

16. Verfahren nach einem der Ansprüche 9 bis 14, wobei das PCD-Array (112) nach Empfangen der Signale von jedem der mehreren Pixel konfiguriert wird.

## Revendications

1. Appareil de détecteur de comptage de photons « PCD » (10, 20), comprenant :
un réseau de PCD (112) incluant une pluralité de pixels positionnés dans au moins une parmi une direction de canal et une direction de rangée ; et
des circuits de traitement (144) configurés pour :
recevoir des signaux en provenance de chacun des pixels,
configurer le réseau de PCD pour inclure (a) une première zone de pixels incluant un premier groupe de pixels de la pluralité de pixels et (b) une seconde zone de pixels incluant un second groupe de pixels de la pluralité de pixels, de telle sorte qu'une partie des pixels se chevauchent entre les premier et second groupes, dans lequel une taille de matrice de groupe de la première zone de pixels et une taille de matrice de groupe de la seconde zone de pixels sont identiques,
sommer les signaux du premier groupe de pixels en une première valeur de bin virtuel ; et
sommer les signaux du second groupe de pixels en une seconde valeur de bin virtuel,
**caractérisé en ce que** les circuits de traitement sont en outre configurés pour
faire varier une quantité de chevauchement entre les premier et second groupes sur la base d'une résolution spatiale.

2. Appareil de détecteur de comptage de photons « PCD » selon la revendication 1, dans lequel les premier et second groupes sont chacun des réseaux de pixels n par m, m et n étant chacun des entiers supérieurs à 1, et
dans lequel le chevauchement entre les premier et second groupes est de m ou n pixels.

3. Appareil de détecteur de comptage de photons « PCD » selon la revendication 1, dans lequel les premier et second groupes sont chacun des réseaux de pixels n par n, n étant un entier supérieur à 1, et
dans lequel le chevauchement entre les premier et second groupes est de n pixels.

4. Appareil de détecteur de comptage de photons « PCD » selon la revendication 2, dans lequel les circuits de traitement (144) sont en outre configurés pour reconfigurer le réseau de PCD de telle sorte que les premier et second groupes soient chacun des réseaux de pixels p par q, p et q étant chacun des entiers supérieurs à 1 et p et q n'étant pas égaux ni à n et m ni à m et n.

5. Appareil de détecteur de comptage de photons « PCD » selon la revendication 2, dans lequel n et m sont respectivement 2 et 3, et p et q sont respectivement 3 et 3.

6. Appareil de détecteur de comptage de photons « PCD » selon la revendication 1, dans lequel la première zone de pixels et la seconde zone de pixels sont chacune non rectangulaires.

7. Appareil de détecteur de comptage de photons « PCD » selon une quelconque revendication précédente, dans lequel les circuits de traitement (144) sont configurés pour configurer le réseau de PCD avant de recevoir les signaux en provenance de chacun des pixels de la pluralité de pixels.

8. Appareil de détecteur de comptage de photons « PCD » selon l'une quelconque des revendications 1 à 6, dans lequel les circuits de traitement (144) sont configurés pour configurer le réseau de PCD après avoir reçu les signaux en provenance de chacun des pixels de la pluralité de pixels.

9. Procédé de sommation de pixels chevauchants, comprenant :
la configuration d'un réseau de PCD (112) incluant une pluralité de pixels positionnés dans au moins une parmi une direction de canal et une direction de rangée pour inclure une première zone de pixels incluant un premier groupe de pixels de la pluralité de pixels et une seconde zone de pixels incluant un second groupe de pixels de la pluralité de pixels, de telle sorte qu'une partie des pixels se chevauchent entre les premier et second groupes, dans lequel une taille de matrice de groupe de la première zone de pixels et une taille de matrice de groupe de la seconde zone de pixels sont identiques,
la réception de signaux en provenance de chacun des pixels ;
la sommation des signaux du premier groupe de pixels en une première valeur de bin virtuel ;
la sommation des signaux du second groupe de pixels en une seconde valeur de bin virtuel, et
**caractérisé en ce que** le procédé comprend en outre l'étape de :
variation d'une quantité de chevauchement entre les premier et second groupes sur la base d'une résolution spatiale.

10. Procédé selon la revendication 9, dans lequel les premier et second groupes sont chacun des réseaux de pixels n par m, m et n étant chacun des entiers supérieurs à 1, et
dans lequel le chevauchement entre les premier et second groupes est de m ou n pixels.

11. Procédé selon la revendication 9, dans lequel les premier et second groupes sont chacun des réseaux de pixels n par n, n étant un entier supérieur à 1, et
dans lequel le chevauchement entre les premier et second groupes est de n pixels.

12. Procédé selon la revendication 10, comprenant en outre une reconfiguration du réseau de PCD (112) de telle sorte que les premier et second groupes soient chacun des réseaux de pixels p par q, p et q étant chacun des entiers supérieurs à 1 et p et q n'étant pas égaux ni à n et m ni à m et n.

13. Procédé selon la revendication 10, dans lequel n et m sont respectivement 2 et 3, et p et q sont respectivement 3 et 3.

14. Procédé selon la revendication 9, dans lequel la première zone de pixels et la seconde zone de pixels sont chacune non rectangulaires.

15. Procédé selon l'une quelconque des revendications 9 à 14, dans lequel le réseau de PCD (112) est configuré avant de recevoir les signaux en provenance de chacun des pixels.

16. Procédé selon l'une quelconque des revendications 9 à 14, dans lequel le réseau de PCD (112) est configuré après réception des signaux en provenance de chacun de la pluralité de pixels.
